# EUROPEAN PATENT SPECIFICATION

(11) **EP 0 413 494 B1**
(45) Date of publication and mention of the grant of the patent: **26.01.1994**
(21) Application number: 90308667.6
(22) Date of filing: 07.08.1990
(51) Int. Cl.: F16L 55/162

(54) **Method for water leakage prevention in pipeline and liner for water leakkage prevention**
Verfahren zur Verhinderung von Wasserleckage in Rohrleitungen und Rohrinnenbeschichtung zur Verhinderung von Wasserleckage
Méthode pour prévenir les fuites d'eau dans une conduite et revêtement pour la prévention des fuites

(30) Priority: 15.08.1989 JP 209531/89
(43) Date of publication of application: 20.02.1991
(73) Proprietor: TOA GROUT KOGYO KABUSHIKI KAISHA, Tokyo (JP); Kabushiki Kaisha Iseki Kaihatsu Koki, Shibuya-ku Tokyo (JP)
(72) Inventor: Kawafuji, Takayuki, Tokyo (JP)
(74) Representative: Downey, William Gerrard

(56) References cited:
- DE-A- 3 503 799
- US-A- 3 700 265
- US-A- 4 346 922

## Description

### BACKGROUND OF THE INVENTION

### Field of the Invention:

This invention relates to a method for preventing water from outflowing from pipelines and inflowing into the pipeline. More specifically, this invention relates to a method for water leakage prevention by utilizing an injection material with fluidity and hardenability and further presents a liner for applying the method to water leakage prevention.

### Description of the Prior Art:

One of known methods for preventing water leakage into and from the pipelines for sewers, water supply and electric cables injects a material with fluidity and hardenability into the ground surrounding a leaking portion of a pipe from the inside of the pipe, so that the water leakage portion is stopped up with the injected material.

According to this known method, the inside of the pipe is partitioned by partitioning means into a space corresponding to the leaking portion and the other space, in which condition an injection material is supplied to the space corresponding to the leaking portion, the injection material is injected around the pipe from the leaking portion, and the injection material injected around the pipe is hardened.

In the prior art, however, there is a risk that the injected material may flow backward into the pipe if the partitioning means is removed from the pipe before the injected material is hardened, and a large amount of an agent for accelerating the solidification of the injected material must be added beforehand to the material to be injected in order to prevent the reflux of the injected material into the pipe.

DE-A-3503799 illustrates a pipe used to help the injection of an injection material, which is supplied between the pipe and a sewage pipeline under pressure. The portion of the injection material protruding into the sewage pipeline and the pipe are removed by a milling cutter or the like after the injection material hardens, and the injection material is exposed to the inner surface of the sewage pipeline.

However, the pipe used in DE-A-3503799 is only reinforced with the injection material, so it cannot have a sufficient strength. Moreover, since the injection material contacts sewage, the injection material tends to deteriorate, so that the strength of a repaired portion and water-sealing property also deteriorate.

On the other hand, in the present invention as undermentioned, an injection material filled in the space between the two innermost projection portions is protected by the liner and is not exposed to the inner surface of the pipeline, so that the injection material is not easily deteriorated. Further, since the injection material filled in the space serves to incorporate the liner with the pipeline and stop up cracks in the pipeline and since the liner alone has sufficient strength and water-sealing property, predetermined strength and water-sealing property can be maintained over a long period of time.

US-A-4346922 relates to a method and a device for repairing a pipeline with a diameter large enough for a man to enter.

A cylindrical member with an inside loop and belt members with overlapped ends is utilised. The cylindrical members, when expanded, are pushed by an expanded member against the inner surfaces of two pipes, preventing the inside loop from extending and the belt members from being set free from overlapping. Thus, according to US-A-4346922, it is difficult to uniformly expand the cylindrical members over the entire circumferential direction.

On the other hand, such a problem will not occur using the present invention, since nothing like the inside loop or members having overlapped portions is used.

It is an object of the present invention to provide a method for preventing water leakage in a pipe, which effectively prevents an injection material from flowing backward into the pipe, and a liner for use in such a method.

A method according to the present invention for preventing water leakage into and from a pipeline by utilizing an injection material with fluidity and hardenability comprises the steps of:
disposing inside a pipe defining the pipeline a liner provided with an elastically deformable sleeve having an outer diameter smaller than the inner diameter of the pipe and having a plurality of elastically deformable and successively circumferentially extending projection portions formed at intervals in the direction of the sleeve on the circumferential surface of the sleeve, a sheet-like base placed inside the sleeve in a spirally wound condition to be radially expandable, fixing means for maintaining the base in a substantially cylindrical shape when the base is radially expanded inside the sleeve, and check valve means defined by the sleeve and the base when the base is radially expanded, said check valve means permitting the injection material to flow out from the inside of the base into the space between the two projection portions disposed innermost in the axial direction,
expanding radially the base to elastically deform the sleeve till the projection portions are pressed against the inner surface of the pipe and elastically deformed,
supplying the injection material into the space between the sleeve and the pipe through the check valve means while maintaining the projection portions in their elastically deformed conditions, and
keeping the base in its expanded condition by the fixing means to maintain the projection portions in their elastically deformed conditions.

The injection material which has flowed into the space between the sleeve and the pipe is injected into the ground around the pipe through crack or joint. As the liner is attached on the inner surface of the pipe, the check valve functions effectively to prevent the injection material between the sleeve and the pipe from flowing backward into the inside of the base. Thus, the injection material injected into the ground around the pipe does not flow backward into the pipe. The injection material which has flowed into the space between the sleeve and the pipe and the injection material which has flowed around the pipe harden with the lapse of time, and consequently the water leakage through the crack or the joint is prevented.

According to the method for leakage prevention of the present invention, the injection material which has flowed into the space between the sleeve and the pipe and that which has flowed around the pipe do not flow backward to the inside of the base even though the means for expanding radially the base and the means for supplying the injection material are removed away, because the liner is attached on the inner surface of the pipe and because the check valve means functions effectively. Furthermore, since the liner itself has a function to prevent leakage, the leakage prevention is maintained even though the hardened injection material is deteriorated with the lapse of time. As a result, the leakage prevention remains effective for a longer period.

The operation for injecting the injection material gets easier if the injection material can be supplied into the space defined inside the liner and communicated with the check valve means in order to supply the injection material into the portion around the pipe while the space connected to the check valve means is partitioned from the other space by the means for expanding the base.

The expanding means can be removed after the base is maintained in the radially expanded condition by the fixing means.

Preferably the water leakage prevention method according to the present invention also comprises the steps of:
cutting the pipe defining the pipeline in order to form an annular recess along the inner surface of the pipe at a predetermined position of the pipe,
disposing in the recess said liner.

Since the liner is placed in the recess according to this leakage prevention method, any foreign matters are prevented from being taken by the liner, when this method is applied to sewers.

The liner for leakage prevention according to the present invention comprises:
an elastically deformable sleeve having a plurality of elastically deformable and successively circumferentially extending projection portions formed at intervals in the direction of the sleeve on the circumferential surface of the sleeve,
a sheet-like base placed inside the sleeve in a spirally wound condition to be radially expandable,
fixing means for maintaining the base in a substantially cylindrical form when the base is radially expanded in the sleeve, and
check valve means defined by the sleeve and the base, the check valve means permitting the injection material with fluidity to flow from the inside of the base into the space between the two projection portions disposed innermost in the axial direction.

According to the liner of the present invention, the check valve means functions effectively so long as the base is maintained in its radially expanded condition by the fixing means. Therefore, according to the liner for leakage prevention of the present invention, the injection material which has flowed into the space between the sleeve and the pipe and that which has flowed around the pipe do not flow backward to the inside of the base even though the means for expanding the base and the means for supplying the injection material are removed.

The check valve means preferably includes a pair of cut portions formed on the sleeve at a space apart from each other, each cut portion extending through the sleeve in its thickness direction, and a hole extending through the base in its thickness direction and formed at a position corresponding to the portion between the cut portions on the sleeve, thereby simplifying the structure of the check valve means.

### BRIEF DESCRIPTION OF THE DRAWINGS

The foregoing and other objects and features of the invention will become apparent from the following description of preferred embodiments of the invention with reference to the accompanying drawings, in which:
Fig. 1 is a perspective view showing a covering material of a preferred embodiment according to the present invention;
Fig. 2 is an enlarged cross-sectional view showing a sleeve of a preferred embodiment according to the present invention;
Fig. 3 is an enlarged perspective view showing a base of a preferred embodiment according to the present invention;
Fig. 4 is an enlarged cross-sectional view showing a liner in its radially expanded condition by an expanding machine of a preferred embodiment according to the present invention;
Fig. 5 is an enlarged cross-sectional view showing an elastically deformed portion of a preferred embodiment according to the present invention;
Fig. 6 is a side view showing the engaged condition between female and male engaging portions of a preferred embodiment according to the present invention;
Figs. 7(A), (B), (C), (D) and (E) are cross-sectional views showing a projection portion of another preferred embodiment according to the present invention, respectively;
Fig. 8 is a perspective view showing a base of another embodiment according to the present invention;
Figs. 9(A), (B) and (C) are perspective views showing male and female engaging portions of another preferred embodiment according to the present invention, respectively;
Fig. 10 is a perspective view showing engaging portions of a further preferred embodiment according to the present invention;
Fig. 11 is a perspective view partially showing a base of a further preferred embodiment according to the present invention;
Figs. 12 and 13 and 14 are perspective views showing a base of a further embodiment according to the present invention, respectively;
Fig. 15 is a development view showing the base of another preferred embodiment according to the present invention;
Fig. 16 is an enlarged side view taken along the line 16-16 in Fig. 15;
Fig. 17 is an enlarged perspective view showing the condition prior to the engagement of the engaging portions of the base in Fig. 15; and
Fig. 18 is a perspective view showing the engaged condition of the engaging portions of the base in Fig. 15.

### DESCRIPTION OF THE PREFERRED EMBODIMENTS

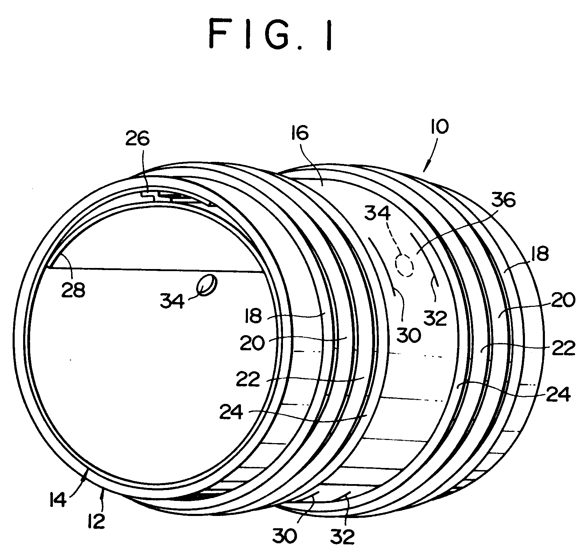

In Fig. 1, a liner 10 includes an elastically deformable sleeve 12 and an elastically deformable sheet-like base 14. It is desirable that the sleeve 12 is made of an impermeable polymeric material such as rubber and synthetic resin. It is desirable that the base 14 is made of a corrosion-resistant material such as stainless steel, copper and copper alloys.

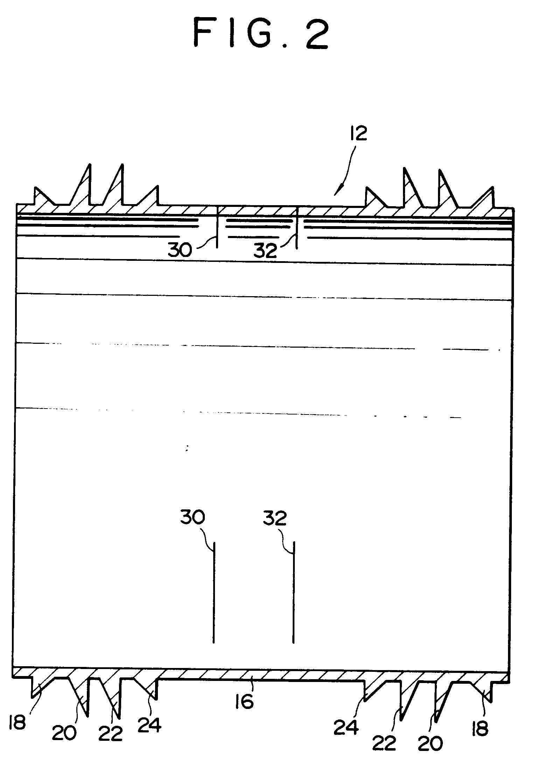

The sleeve 12 has a plurality of projection portions 18, 20, 22 and 24 formed on each end of a cylindrical portion 16 in its axial direction and successively extending in the circumferential direction on the circumferential surfaces of the corresponding end. As shown in Fig. 2, each of the projection portions 18, 20, 22 and 24 has a cross-section shape of a right triangle, with the base of the right triangle formed at the side of the cylindrical portion 16. All projection portions or intermediate projection portions 20 and 22 may be made of synthetic resin which expands by absorbing water.

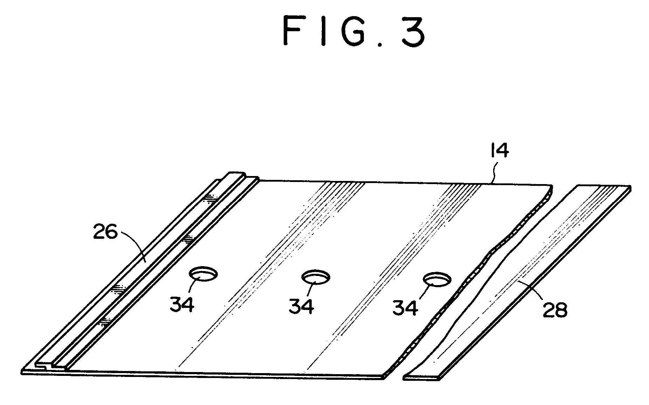

A female engaging portion 26 is formed at one end of the base 14 in the longitudinal direction. As shown in Fig. 3, the female engaging portion 26 has a Z-like shape in cross section and consists of an elongate metal fitting fixed at the base 14. Also, tle female engaging portion 26 extends over the base 14 in its entire width direction. A male engaging portion 28 received in the female engaging portion 26 to be engaged therewith is the other end portion of the base 14 in Fig. 3, but may be an engaging portion having a different shape, for example, a metal fitting similar to the female engaging portion 26.

As shown in Figs. 1 and 2, the sleeve 12 has three pairs of cuts 30 and 32 extending from one side to the other of the sleeve in the thickness direction. The cuts 30 and 32 are positioned at the center portion in the axial direction of the sleeve 12 ard formed with equal angular intervals in the circumferential direction of the sleeve 12.

As shown in Fig. 3, the base 14 has three holes 34 extending through the base 14 in its thickness direction. The holes 34 are formed at positions at equal angular intervals when the base 14 is deformed into a cylindrical form such that the engaging portions 26 and 28 are engaged, namely, when the base 14 is spirally wound to be radially expandable.

As shown in Fig. 1, the base 14 is wound, i.e., bent, spirally such that the male engaging portion 28 is positioned inside the female engaging portion 26 and that the one hole 34 positioned at the center is opposite to the position 36 between a pair of cuts 30 and 32 of the sleeve 12. Thereafter, the base 14 is positioned inside the sleeve 12. In this condition, the base 14 is bound by the sleeve 12 to be prevented from expanding radially. By this, the relative movements of the sleeve 12 and the base 14 along the axial direction of the sleeve 12 can be prevented without using any particular metal fitting. However, the base 14 may be sprially wound in advance such that the base 14 is positioned within the sleeve 12.

The inner diameter of the sleeve 12, the axial length of the sleeve 12, the thickness of the cylindrical portion 16, and the length, the thickness and the cross-sectional shape of each projection portion are all arbitrarily selected depending on their mutual relation, the dimension of the pipe to be processed for leakage prevention and that of the portions to be processed as well. However, the outer diameter of the sleeve 12 is smaller than the inner diameter of the pipe to be processed for leakage prevention. Also, the inner diameter of the sleeve 12 is smaller than the outer diameter of the base 14 at the time: when the base 14 is radially expanded such that the engaging portions 26 and 28 are engaged with each other.

In the illustrated embodiment, the height of each of the projection portions 18 and 24 is greater than the thickness of the cylindrical portion 16, and the height of each of the projection portions 20 and 22 greater than that of each of the projection portions 18 and 24. However, the height of each of the projection portions 18 and 24 may be made smaller than the thickness of the cylindrical portion 16 or equal to that. Also, the height of each of the projection portions 18, 20, 22 and 24 may be made equal.

For instance, in case of the sleeve for a sewer whose bore diameter is 250 mm, the inner diameter of the sleeve 12, the thickness of the cylindrical portion 16 of the sleeve 12, the height of each of the projection portions 18 and 24, and that of each of the projection portions 20 and 22 can be set at 180-220 mm, 0.5-1 mm, 2-5 mm, and 5-10 mm, respectively.

In case of the illustrated embodiment, the width of the base 14, namely, the axial length, is substantially equal to the axial length of the sleeve 12, but it is satisfactory so long as the length is greater than the distance between both ends of the projection portions 18 which are positioned at both extreme ends of the sleeve 12. The length of the base 14 is greater than that along the inside of the sleeve 12 but varies depending on the inner diameter of the pipe to be processed for leakage prevention. The thickness of the base 14 may be smaller than that of the sleeve 12 and is defined as 0.5-3 mm, for example.

An embodiment of the present invention will now be described concerning the method for leakage prevention utilizing the liner 10.

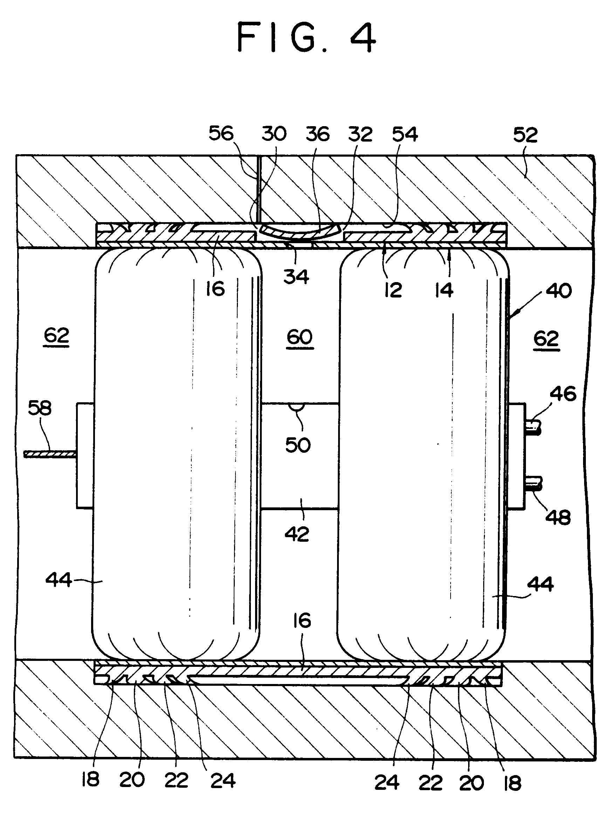

As shown in Fig. 4, first of all, the liner 10 is placed in an expanding machine 40 for expanding the liner.

The expanding machine 40 comprises a shaft portion 42, a pair of expansion portions 44 fixed on the shaft portion at intervals in its axial direction and expanded by compressed air like a floating ring, a nipple 46 receiving the compressed fluid such as compressed air, and the other nipple 48 receiving an injection material with fluidity and hardenability. The nipple 46 and both of the expansion portions 44 are mutually communicated through the hole (not shown) formed in the shaft portion 42. The shaft portion 42 has a spout 50 for the injection material opening to the circumferential surface of the position between both expansion portions 44, and the spout 50 is communicated with the nipple 48 through the other hole (not shown) formed in the shaft portion 42.

As the above-mentioned expanding machine 40, for instance, a known water-sealing injector sold as Packer which is commercially available and has been manufactured by Toa Grout Kogyo Kabushiki Kaisha, one of the applicants of the present invention. The expanding machine 40 is received into the inside of the liner 10, namely, the inside of the base 14 under the condition that the expansion portions 44 are in a contracted condition.

The liner 10 is located in the expanding machine 40 such that the hole 34 of the base 14 is positioned between both of the expansion portions 44.

Subsequently, each expansion portion 44 is expanded by the compressed fluid supplied to the expansion portion 44 through the nipple 46 and the shaft portion 42 to the extent that the line 10 does not displace relative to the expanding machine 40 and is maintained as it is. The compressed fluid is supplied to the nipple 46 through a hose from a fluid source placed on the ground.

As shown in Fig. 4, a recess 54 is preformed in order to place the liner 10 in the portion within the pipe 52 to be processed for leakage prevention. The recess 54 extends successively and circumferentially on the inner surface of the pipe 52. The axial length of the recess 54 is substantially equal to that of the liner, but the depth of the recess 54 is slightly smaller than the thickness of the liner 10 including the height of the projection portions 20. The portion to be processed is the position having a crack 56 of the pipe 52 in case of Fig. 4, but may be a communication portion between mutually adjacent pipes.

Then, the liner 10 and the expanding machine 40 are moved from the one end portion of the pipe 52 to the position of the recess 54 within the pipe 52, and they can be also moved within the pipe 52 by pulling a rope 58 connected to the expanding machine 40 toward the side of the other end of the pipe 52. The liner 10 and the expanding machine 40 are moved together to a predetermined position by monitoring a picture image through a TV camera.

When the liner 10 and the expanding machine 40 are moved to the predetermined position within the pipe 52, the expansion portion 44 is further expanded by the compressed fluid supplied to the nipple 46. By this, the liner 10 is disposed at the recess 54 such that both ends of the base 14 are radially expanded to slightly overlap or, in other words, to the extent that both engaging portions 26 and 28 are engaged with each other.

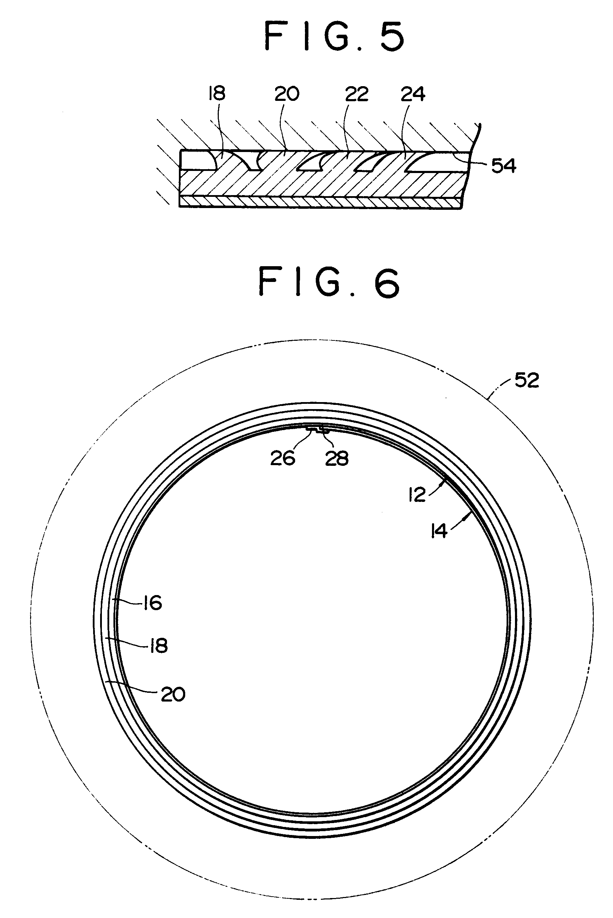

When the base 14 is radially expanded, the liner 10 is pressed against the inner surface of the pipe 52, and as a result, the sleeve 12 is compressed. However, as each cross-sectional form of the projection portions 18, 20, 22 and 24 is triangle, the projection portions 18, 20, 22 and 24 are elastically deformed when the liner 10 is pressed against the inner surface of the pipe 52. Namely, in the illustrated embodiment, as shown in Fig. 5, the projection portions 18, 20, 22 and 24 are bent toward the opposite side to the projection portion 20, toward the side of the projection portion 22, toward the side of the projection portion 24 and toward the opposite side to the projection portion 22, respectively, and then, further compressed. As a result, each of these projection portions is pressed by its restoring force against the inner surface of the pipe 52.

Each of the projection portions is integral with the sleeve 12, and the position at the side of the cylindrical portion 16 of the projection portions 18, 20, 22 and 24 does not expand in the axial direction of the sleeve 12 even though the projection portions 18, 20, 22 and 24 are compressed. As a result, the projection portions 18, 20, 22 and 24 are surely pressed against the inner surface of the pipe 52.

When the base 14 is radially expanded to the predetermined dimension, each hole 34 gets opposite to the portion 36 between the cuts 30 and 32 of the sleeve 12 and is blocked by the opposite portion 36. As each expansion portion 44 of the expanding machine 40 is abutted against the inner surface of the base 14 so that each expansion portion may press the sleeve 12 against the inner surface of the pipe 52, the space 60 between the expansion portions 44 of the internal spaces in the pipe 52 is partitioned by the expansion portions 44 from the other space 62.

Then, the injection material with fluidity and hardenability like a slurry type cement is supplied into the nipple 48 of the expanding machine 40 from an injection material source installed on the ground at higher pressure than the earth pressure around the pipe 52. As an injection material, powder, liquid or slurry material can be used and also a material with coagulating property and hardenability is desirable.

The injection material provided into the nipple 48 is spouted out into the space 60 from the spout 50 of the expanding machine 40. The injection material which has got to the space 60 pushes each position 36 of the sleeve 12 from the hole 34 of the base 14 to force the cuts 30 and 32 of the sleeve 12 open, and further flows out around the pipe 52 by way of the crack 56 or the joint portion of the adjacent pipes 52 through the space between the liner 10 and the pipe 52 from the cuts 30 and 32.

When a predetermined amount of the injection material is injected around the pipe 52, the supply of the injection material into the nipple 48 is stopped. As the pressure within the space 60 is lowered by this action and the earth pressure around the pipe 52 reacts against the circumferential surface of the sleeve 12, each hole 34 of the base 14 is blocked by the portion 36 of the sleeve 12. The injection material around the liner 10 does not flow backward into the space 60 from each hole 34 of the base 14 even though the pressure of the space 60 becomes lower than that around the liner 10.

After the compressed fluid in the expansion portion 44 is removed, the expanding machine 40 is removed from the pipe 52 together with the TV camera. When the compressed fluid is removed from the expansion portions 44, the sleeve 12 applies a contracting force to the base 14, and the male engaging portion 28 in the base 14 is inserted into the female engaging portion 26 as shown in Fig. 6. In this manner, the sleeve 12 is maintained in its expanded condition.

When the female and male engaging portions 26 and 28 of the base 14 are engaged with each other, the base 14 is radially and slightly contracted. However, the contraction of the base 14 is absorbed due to a slight recovery of the projection portions 18, 20, 22 and 24, so that the projection portions of the sleeve 12 are kept in the condition that these projection portions are pressed against the inner surface of the pipe 52 as shown in Figs. 4 and 5. Thus, each hole 34 of the base 14 is maintained in its blocked condition by the position 36 of the sleeve 12.

Figs. 4 and 5 show that a void is formed between the adjacent projection portions, but the void is not always formed depending on the deformation amounts of the projection portions. Fig. 6 shows as if each of the projection portions would not be deformed, but as a matter of fact, each of them is deformed as described above.

When the expanding machine 40 is removed, a large part of the injection material remaining in the space 60 is also removed together with the expanding machine 40. After then, the inside of the pipe 52 is washed with water or the like, whereby the remaining injection material in the pipe 52 is also removed with cleaning water, which does not flow out around the liner 10 so long as its pressure is held below the earth pressure around the pipe 52.

The injection material around the liner 10, within the crack 56, within the joint and/or around the pipe 52, coagulates with the lapse of time and hardens. Thereby, the leakage into and out of the pipe 52 is prevented.

According to the above-mentioned embodiment, there is little risk that the foreign matters in the fluid flowing inside the pipe 52 gets trapped in the liner 10. However, it is not necessary to form the recess 54.

It is desirable to clean the inside of the pipe 52, prior to the disposition of the liner 10 therein and also to close the inlet of the pipe 52 so that other fluid such as sewage may not flow therein during repairs.

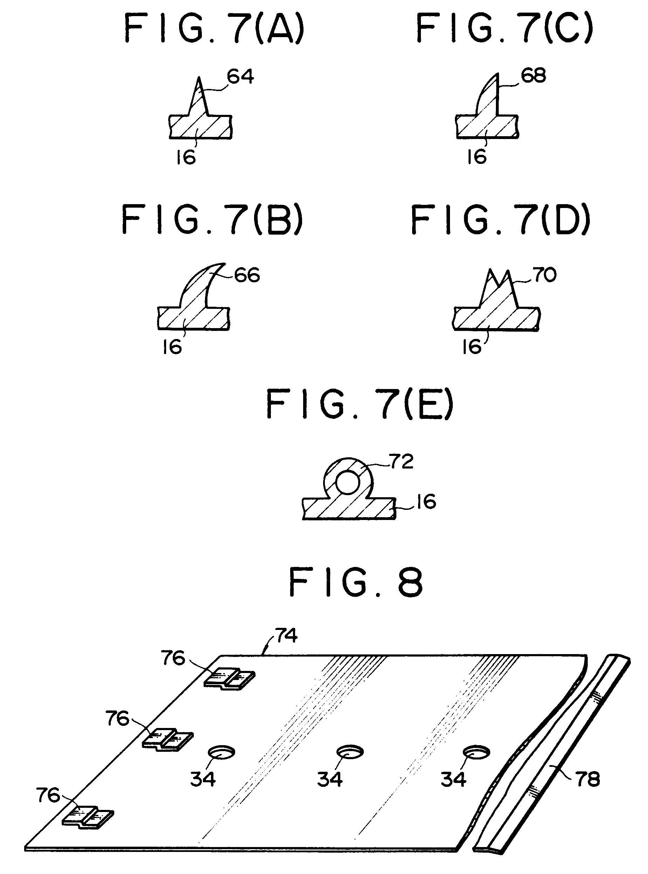

The cross-sectional shapes of the projection portions may differ from the above-mentioned shapes. A projection portion 64 shown in Fig. 7(A) has the cross-sectional shape of an isosceles triangle and those of 66 and 68 shown in Figs. 7(B) and 7(C) have cross-sectional shapes like a brush-tip. A projection portion 70 shown in Fig. 7(D) has an inverted W-like cross-sectional shape. According to these projection portions, the water-tightness between the liner and the pipe can be maintained by pressing these projection portions against the inner surface of the pipe, even though there is much or less irregularity on the inner surface of the pipe. However, the cross-sectional shape of the projection portion may be a trapezoide or the like. A projection portion 72 shown in Fig. 7(E) has a tubular cross-sectional shape and is elastically deformed when the liner is pressed against the inner surface of the pipe even in case where the liner has such projection portion 72.

It is not always necessary that the engaging portion as fixing means to maintain the condition of keeping the base 14 expanded successively extends in its cross direction of the base 14, and an engaging portion of different shapes and kinds may be utilized.

A base 74 shown in Fig. 8 has female engaging portions 76 at a plurality of positions at intervals in its cross direction and at the one end of its longitudinal direction. Each female engaging portion 76 consists of metal fitting having a Z-like cross-sectional shape, and the metal fittings are fixed at the base 74 at intervals in the cross direction of the base 74. A male engaging portion 78 received in the female engaging portions 76 to be engaged therewith is the other end of the base 74 in the illustrated embodiment, but a male engaging portion of another shape will do.

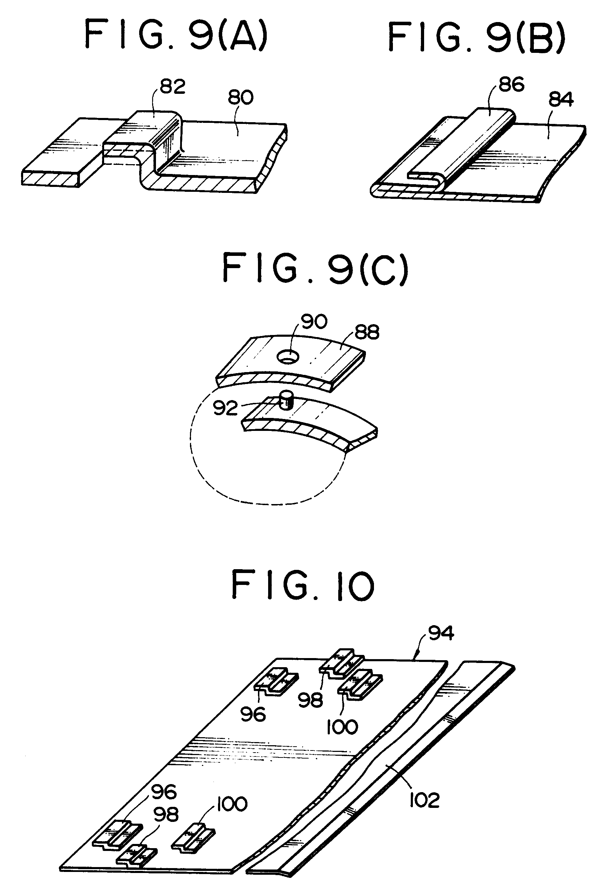

The female engaging portion may be the one 82 consisting of a tongue embossed by pressing part of the base 80 from one side of the base 80 to the other side as shown in Fig. 9(A) or may be also the one 86 formed by folding one end of the base 84 to a Y-like shape as shown in Fig. 9(B). Further, it may be the one 90 consisting of a plurality of holes formed at one end of the base 88 as shown in Fig. 9(C). In case of the female engaging portion 90 as shown in Fig. 9(C), a projection formed at the other end portion of the base 88 so as to be inserted into the female engaging portion 90 may be utilized as a male engaging portion 92.

As fixing means for maintaining the base in an expanded condition, a plurality of male or female engaging portions may be formed at intervals in the longitudinal direction of the base. In this manner, one of female or male engaging portions can be engaged with the other of female or male engaging portion, so that the engaging portion to be engaged with each other can be selected depending on the pressure of the liner.

The fixing means of the base 94 shown in Fig. 10 has a plurality of female engaging portions 96, 98 and 100 along a plurality of respective virtural lines at intervals in the longitudinal direction of the base 94 and a male engaging portion 102 selectively engaged with the female engaging portions. The female engaging portions 96, 98 and 100 consist of the Z-like metal fittings fixed at a predetermined position of the one end portion of the base 94. The male engaging portion 102 is the other end portion of the base 94 and is slightly bent relative to the other position. According to the base 94, as the male engaging portion 102 can be engaged with one of the female engaging portions 96, 98 or 100, the female engaging portion to engage the male engaging portion 102 can be selected depending on the pressure of the liner applied to the pipe.

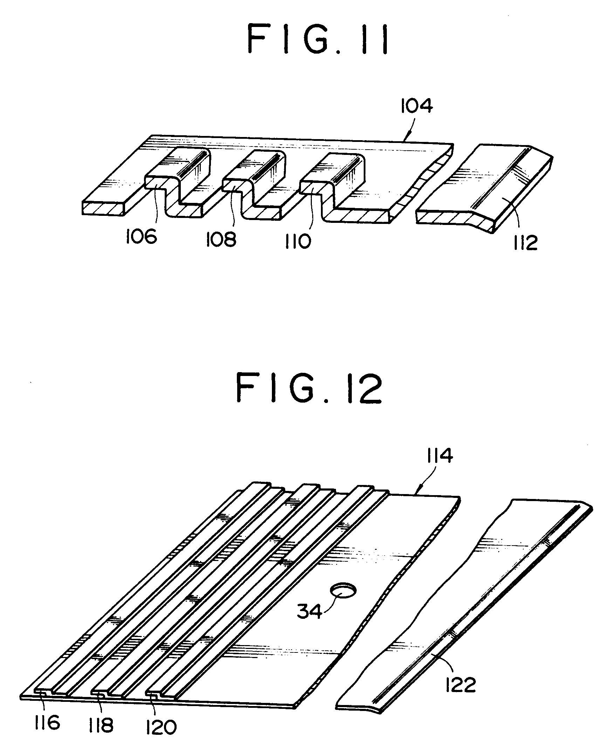

The fixing means for a base 104 shown in Fig. 11 has a plurality of the female engaging portions 106, 108 and 110 formed at one end portion of the base 104 in a matrix-like form, and the male engaging portion 112 of the other end portion of the base 104. The female engaging portions 106, 108 and 110 consist of a tongue embossed from one side of the base 104 to the other side by pressing part of the base 104. The male engaging portion 112 is slightly bent relative to the other position.

The fixing means for a base 114 shown in Fig. 12 has a plurality of the female engaging portions 116, 118 and 120 extending in parallel to the cross direction of the base 114 and at intervals in the longitudinal direction of the same, and the male engaging portion 122 selectively engaged with the female engaging portions. The female engaging portions 116, 118 and 120 consist of Z-like metal fittings fixed at predetermined positions of one end of the base 114 and extend successively in the cross direction of the base 114. The male engaging portion 122 is the other end portion of the base 114 and is slightly bent relative to the other position.

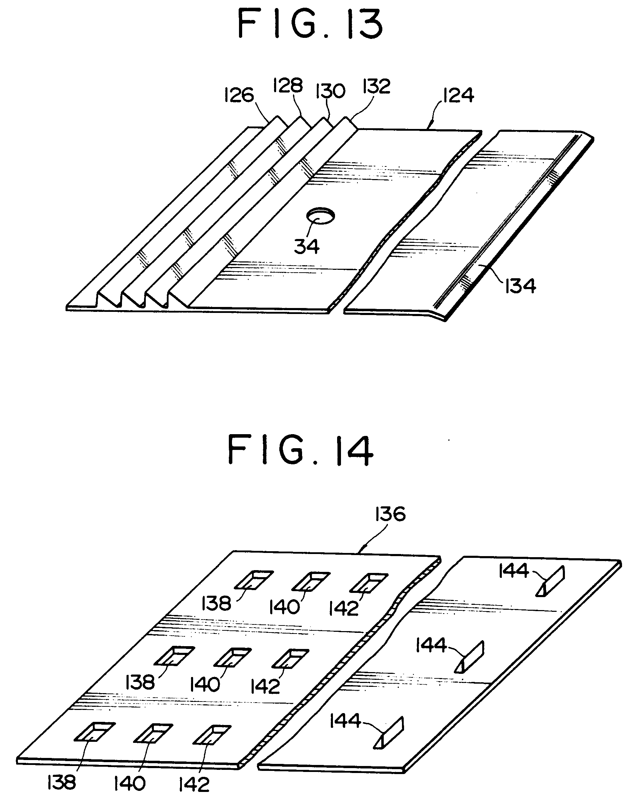

The fixing means for a base 124 shown in Fig. 13 has a plurality of engaging portions 126, 128, 130 and 132 at one end portion of the base 124 at intervals in its longitudinal direction and an engaging portion 134 engaged with one of the engaging portions. The engaging portions 126, 128, 130 and 132 consist of a member having a triangle cross-sectional form and is fixed on the base 124. The engaging portion 124 is the other end portion of the base 124 and is bent so as to be easily engaged with the engaging portions 126, 128, 130 and 132. Each of the engaging portions 126, 128, 130 and 132 may be divided into parts in the cross direction of the base 124.

The fixing means for a base 136 shown in Fig. 14 has a plurality of engaging portions 138, 140 and 142 including a plurality of rectangular holes formed at one end portion of the base 136 in a matrix-like form and engaging portions 144 including a plurality of projection portions formed at the other end portion of the base 136. Each projection portion 144 corresponds to the holes 138, 140 and 142 corresponding to the row of the matrix. The holes 138, 140 and 142 extend through the base 136 in its thickness direction, and a pair of opposed sides of the rectangle are formed to be positioned in the cross direction of the base 136. The engaging portion 144 has a right-angled triangular cross-sectional form and is fixed to the base 136 such that one of the two faces corresponding to the two sides intersecting at right angles in the right-angled triangle is at the other side of the base 136 and the other of the two faces is at the side of the base 136.

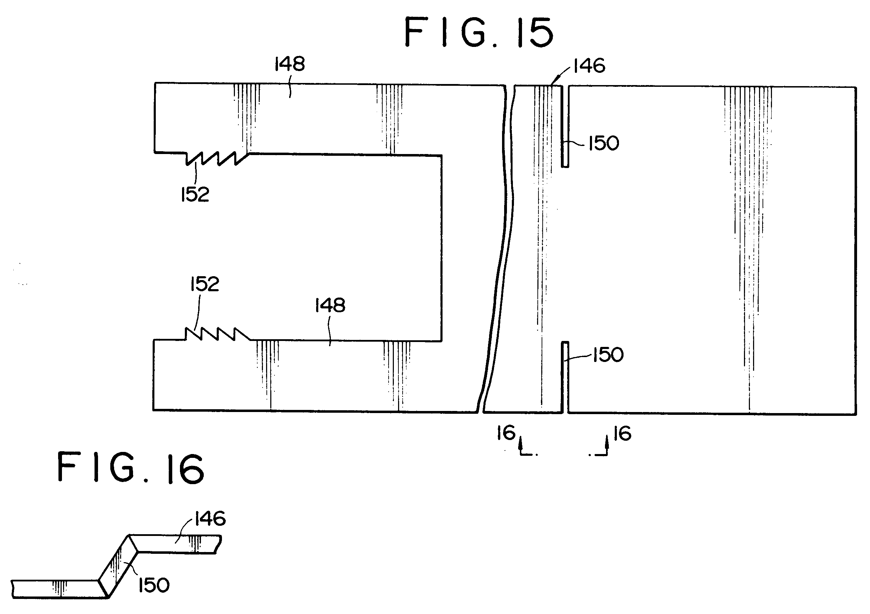

The fixing means for a base 146 shown in Figs. 15, 16, 17 and 18 has a pair of belt-shaped extending portions 148 extending in parallel at an interval in the cross direction of the base 146 from the end edge of the base 146. The end portion of the base 146 on the opposite side to the extending portion 148 is deformed to be slightly larger than the thickness of the base 146 in its thickness direction from the other position.

In the deformed position of the base 146, a pair of long and narrow notch portions 150 are formed at an interval in the cross direction of the base 146. Each notch portion 150 corresponds to the extending portion 148. Also, each notch portions 150 extends to the center from the end edge of the base 146 in its cross direction. The length of the notch portion 150 is approximately equal to the width of the corresponding extending portion 148. In the inside of the tip portion of each extending portion 148, a sawtooth-like portion 152 is formed. Each tooth of the sawtooth-like portion 152 can engage with the position defining the notch portion 150 of the base 146.

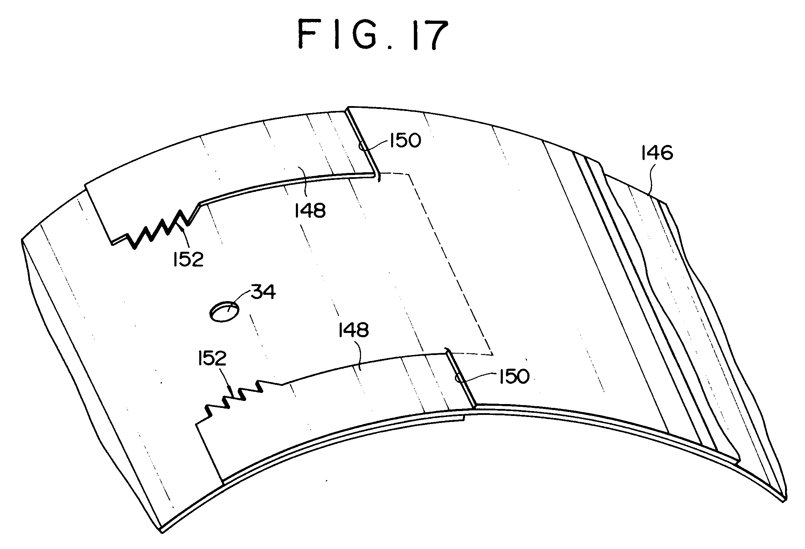

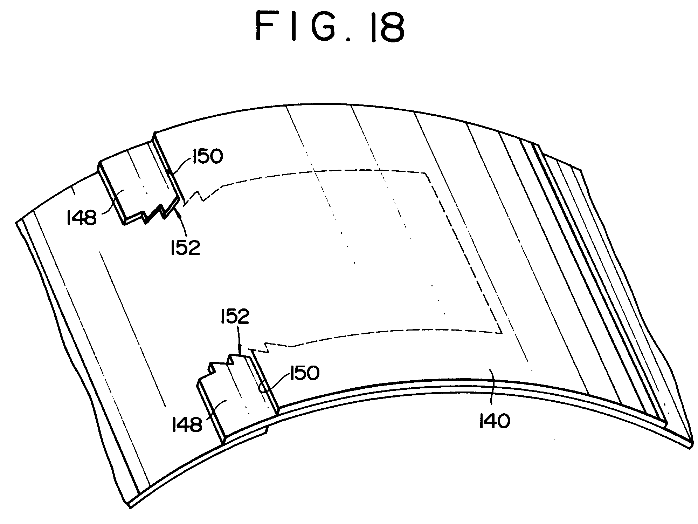

As shown in Fig. 17, the base 146 is disposed inside the sleeve in the wound-up condition such that the extending portion 148 passes through the notch portion 150 from the inside of the base 146 to the outside of the same and the most part of the extending portion 148 is located at the outside of the base 146. Also, as shown in Fig. 18, the base 146 is maintained in a cylindrically expanded condition by engaging with the position defining the notch portion 150 of the base 146 by any of teeth in the sawtooth-like portion 152. Therefore, in the base 146, the teeth in the sawtooth-like portion 152 and the position defining the notch portion 150 in the base 146 act as fixing means in order to maintain the base 146 in its expanded condition.

The present invention is applicable not only to the treatment for the leakage prevention in an actually leaking portion but also to that for a portion likely to leak where cracks and the like are formed.

## Claims

1. A method for water leakage prevention by utilizing an injection material with fluidity and hardenability to prevent the water leakage into and from a pipeline, comprising the steps of:
disposing inside a pipe (52) defining said pipeline a liner (10) provided with an elastically deformable sleeve (12) having an outer diameter smaller than the inner diameter of said pipe and having a plurality of elastically deformable and successively circumferentially extending projection portions (18,20,22,24,64,66,68,70,72) formed at intervals on the circumferential surface of the sleeve in its axial direction, a sheet-like base (14,74,80,84,88,94,104,114,124,136,146) placed inside said sleeve in a radially expandable, wound cylindrical form, fixing means (26,28,76,78,82,86,90,92,96,98,100,102,106,108, 110,116,118,120,122,126,128,130,132,134,138,140,142,144,148,150,152) for maintaining said base in a substantially cylindrical shape when said base is radially expanded in said sleeve, and check valve means (30,32,34,36) defined by said sleeve and said base when said base is radially expanded, said check valve means permitting said injection material to flow from the inside of said base into the space between the two projection portions (24,24) disposed innermost in the axial direction;
expanding radially said base to elastically deform said sleeve till said projection portions are pressed against the inner surface of said pipe and elastically deformed;
supplying said injection material into the space between said sleeve and said pipe through said check valve means while maintaining said projection portions in their elastically deformed conditions; and
keeping said base in its expanded condition by said fixing means to maintain said projection portions in their elastically deformed conditions.

2. A method for water leakage prevention according to claim 1, wherein said check valve means includes a pair of cut portions (30,32) formed on said sleeve (12) at a space apart from each other, said cut portion extending through said sleeve in its thickness direction, and a hole (30) extending through said base in its thickness direction at a position corresponding to the portion between the cut portions on the sleeve.

3. A method for water leakage prevention according to claim 2, wherein said injection material is supplied into the space defined inside said liner (10) and communicated with said check valve means while said space communicated with said check valve means is partitioned by expanding means (40) for said base from the other space.

4. A method for water leakage prevention according to claim 3, further comprising the step of removing said expanding means (40) after the step of keeping said base by said fixing means.

5. A method for water leakage prevention according to claim 1, further comprising the steps of:
cutting said pipe (52) in order to form an annular recess (54) along the inner surface of said pipe at a predetermined position of said pipe; and
disposing in said recess said liner (10).

6. A liner for water leakage prevention into and from a pipeline, comprising:
an elastically deformable sleeve (12) having a plurality of elastically deformable and successively circumferentially extending projection portions (18,20,22,24,64,66,68,70,72) formed at intervals on the circumferential surface of the sleeve in its axial direction:
a sheet-like base (14,74,80,84,88,94,104,114,124,136,146) placed inside said sleeve in a radially expandable, wound cylindrical form;
fixing means (26,28,76,78,82,86,90,92,96,98,100,102,106,108, 110,116,118,120,122,126,128,130,132,134,138,140,142,144,148,150,152) for maintaining said base in a substantially cylindrical form when said base is radially expanded in said sleeve; and
check valve means (30,32,34,36) defined by said sleeve and said base when said base is radially expanded, said check valve means permitting the injection material with fluidity to flow from the inside of said base into the space between the two projection portions (24,24) disposed innermost in the axial direction.

7. A liner for water leakage prevention according to claim 6, wherein said check valve means includes a pair of cut portions (30,32) formed on said sleeve at a space apart from each other, said cut portion extending through said sleeve in its thickness direction, and a hole (34) extending through said base in its thickness direction at a position corresponding to the portion between said cut portions on the base.

## Patentansprüche

1. Verfahren zur Verhinderung von Wasserleckage durch Anwenden eines fließfähigen und aushärtbaren Einspritzmaterials, um den Wasserdurchtritt in eine und aus einer Rohrleitung zu verhindern, mit den Verfahrensschritten:
innerhalb eines Rohres (52), das die genannte Rohrleitung definiert, erfolgendes Anordnen einer Einlage (10), die mit einer elastisch verformbaren Hülse (12), die einen Außendurchmesser, der kleiner ist als der Innendurchmesser des genannten Rohres, und eine Mehrzahl elastisch verformbarer und sich fortlaufend in Umfangsrichtung erstreckender Vorsprungsteile (18, 20, 22, 64, 66, 68, 70, 72) besitzt, die an der umfänglichen Oberfläche der Hülse in in deren Axialrichtung gemessenen Abständen voneinander ausgebildet sind, mit einem blechartigen Grundelement (14, 74, 80, 84, 88, 94, 104, 114, 124, 136, 146), das innerhalb der genannten Hülse in einer radial aufweitbaren, gewundenen zylindrischen Form angeordnet ist, mit Festlegmitteln (26, 28, 76, 78, 82, 86, 90, 96, 98, 100, 102, 106, 108, 110, 116, 118, 120, 122, 126, 128, 130, 132, 134, 138, 140, 142, 144, 148, 150, 152), um das genannte Grundelement in einer im wesentlichen zylindrischen Form zu halten, wenn das genannte Grundelement in der genannten Hülse radial aufgeweitet ist, und mit einer Rückschlagven- tileinrichtung (30, 32, 34, 36) versehen ist, die durch die genannte Hülse und das genannte Grundelement definiert ist, wenn das genannte Grundelement radial aufgeweitet ist, wobei die genannte Rückschlagventileinrichtung ermöglicht, daß das genannte Einspritzmaterial von der Innenseite des genannten Grundelements her in den Raum zwischen den zwei Vorsprungsteilen (24, 24) einströmt, die, bezogen auf die Axialrichtung, am weitesten innenliegend angeord- net sind;
radiales Aufweiten des genannten Grundelementes, um die genannte Hülse elastisch zu verformen, bis die genannten Vorsprungsteile gegen die innere Oberfläche des genannten Rohres angepreßt und elastisch verformt werden;
Zuführen des genannten Einspritzmaterials in den Raum zwischen der genannten Hülse und dem genannten Rohr durch die Rückschlagventileinrichtung hindurch, während die genannten Vorsprungsteile in ihrem elastisch verformten Zustand gehalten werden;
Halten des genannten Grundelements in seinem aufgeweiteten Zustand mittels der genannten Festlegmittel, um die genannten Vorsprungsteile in ihrem elastisch verformten Zustand zu halten.

2. Verfahren zur Verhinderung von Wasserleckage nach Anspruch 1, bei dem die genannte Rückschlagventileinrichtung ein Paar Einschnitteile (30, 32) beinhaltet, die an der genannten Hülse (12) in einem Abstand voneinander ausgebildet sind, wobei der genannte Einschnitteil sich durch die genannte Hülse in Richtung von deren Dicke hindurch erstreckt und eine Öffnung (34) sich durch das genannte Grundelement in Richtung von dessen Dicke an einer Stelle hindurch erstreckt, die dem Bereich zwischen den Einschnitteilen an der Hülse entspricht.

3. Verfahren zur Verhinderung von Wasserleckage nach Anspruch 2, bei dem das genannte Einspritzmaterial in den Raum zugeführt wird, der innerhalb der genannten Einlage (10) abgegrenzt ist und mit der genannten Rückschlagventileinrichtung in Verbindung steht, während der genannte, mit der genannten Rückschlagventileinrichtung in Verbindung stehende Raum mittels einer Einrichtung (40) zum Aufweiten des genannten Grundelements von dem übrigen Raum abgetrennt ist.

4. Verfahren zur Verhinderung von Wasserleckage nach Anspruch 3, das den weiteren Verfahrensschritt aufweist, daß die Einrichtung zum Aufweiten (40) nach dem Verfahrensschritt des mittels der genannten Festlegmittel erfolgenden Haltens des genannten Grundelements entfernt wird.

5. Verfahren zur Verhinderung von Wasserleckage nach Anspruch 1, außerdem die Verfahrensschritte aufweisend:
Fräsen des genannten Rohres (52), um eine ringförmige Vertiefung (54) längs der inneren Oberfläche des genannten Rohres an einer vorbestimmten Stelle des Rohres zu bilden; und
Anordnen der genannten Einlage (10) in der genannten Vertiefung.

6. Einlage zur Verhinderung von Wasserdurchtritt in eine und aus einer Rohrleitung, aufweisend:
eine elastisch verformbare Hülse (12) mit einer Mehrzahl elastisch verformbarer und sich fortlaufend umfänglich erstreckender Vorsprungsteile (18, 20, 22, 24, 64, 66, 68, 70, 72), die an der umfänglichen Oberfläche der Hülse in in deren Axialrichtung gemessenen Abständen voneinander ausgebildet sind;
ein blechartiges Grundelement (14, 74, 80, 84, 88, 94, 104, 114, 124, 136, 146), das innerhalb der genannten Hülse in einer radial aufweitbaren, gewundenen zylindrischen Form angeordnet ist;
Festlegmittel (26, 28, 76, 78, 82, 86, 90, 96, 98, 100, 102, 106, 108, 110, 116, 118, 120, 122, 126, 128, 130, 132, 134, 138, 140, 142, 144, 148, 150, 152), um das genannte Grundelement in einer im wesentlichen zylindrischen Form zu halten, wenn das genannte Grundelement in der genannten Hülse radial aufgeweitet ist; und
eine Rückschlagventileinrichtung (30, 32, 34, 36), die durch die genannte Hülse und das genannte Grundelement definiert ist, wenn das genannte Grundelement radial aufgeweitet ist, wobei die genannte Rückschlagventileinrichtung ermöglicht, daß das genannte Einspritzmaterial mit Fließfähigkeit von der Innenseite des genannten Grundelements her in den Raum zwischen den zwei Vorsprungsteilen (24, 24) einströmt, die, bezogen auf die Axialrichtung, am weitesten innenliegend angeordnet sind.

7. Einlage zur Verhinderung von Wasserdurchtritt nach An spruch 6, bei der die genannte Rückschlagventileinrichtung ein Paar Einschnitteile (30, 32) beinhaltet, die an der genannten Hülse in einem Abstand voneinander ausgebildet sind, wobei sich der Einschnitteil durch die genannte Hülse in Richtung von deren Dicke hindurch erstreckt und eine Öffnung (34) sich durch das genannte Grundelement in Richtung von dessen Dicke an einer Stelle hindurch erstreckt, die dem Bereich zwischen den genannten Einschnitteilen an dem Grundelement entspricht.

## Revendications

1. Procédé d'empêchement de fuite d'eau, à l'aide d'un matériau d'injection doté d'une certaine fluidité et capacité de durcissement, pour empêcher l'entrée et la sortie d'une fuite d'eau par rapport à une canalisation, comprenant les étapes de :
disposition, à l'intérieur d'un tuyau (52) définissant ladite canalisation, d'un élément de recouvrement (10) pourvu d'un manchon déformable élastiquement (12) présentant un diamètre extérieur inférieur au diamètre intérieur dudit tuyau et présentant une pluralité de parties saillantes (18,20,22,24,64,66,68,70,72) déformables élastiquement et s'étendant successivement circonférentiellement, formées à des intervalles déterminés sur la surface circonférentielle du manchon, dans sa direction axiale, une base en forme de feuille (14,74,80,84,88,94,104,114,124,136,146) placée à l'intérieur dudit manchon, sous une forme cylindrique enroulée, radialement sous des moyens de fixation (26,28,76,82,86,90,92,96,98,100,102,106,108,110,116,118, 120,122,126,128,130,132,134,138,140,142,144,148,150,152) pour maintenir ladite base sous une forme sensiblement cylindrique lorsque ladite base est expansée radialement dans ledit manchon et des moyens formant clapet de non-retour (30,32,34,36), définis par ledit manchon et ladite base lorsque ladite base est expansée radialement, lesdits moyens formant clapet de non-retour permettant audit matériau d'injection de s'écouler, depuis l'intérieur de ladite base, vers l'espace compris entre les deux parties saillantes (24,24) disposées le plus à l'intérieur, dans la direction axiale;
expansion radiale de ladite base pour déformer élastiquement ledit manchon, jusqu'à ce que lesdites parties saillantes soient comprimées contre la surface intérieure dudit tuyau et déformées élastiquement;
amenée dudit matériau d'injection dans l'espace compris entre ledit manchon et ledit tuyau, par l'intermédiaire dudit moyen formant clapet de non-retour, tout en maintenant lesdites parties saillantes dans leurs états déformés élastiquement; et
maintien de ladite base dans son état expansé, par ledit moyen de fixation, pour maintenir lesdites parties saillantes dans leurs états déformés élastiquement.

2. Procédé d'empêchement de fuite d'eau selon la revendication 1, dans lequel ledit moyen formant clapet de non-retour comprend un couple de parties découpées (30,32) formées, en des emplacements éloignés l'un de l'autre, sur ledit manchon (12), ladite partie découpée traversant ledit manchon dans le sens de son épaisseur et un trou (30) traversant ladite base dans le sens de son épaisseur, dans une position correspondant à la partie située entre les parties découpées sur le manchon.

3. Procédé d'empêchement de fuite d'eau selon la revendication 2, dans lequel ledit matériau d'injection est amené dans l'espace défini à l'intérieur dudit élément de recouvrement (10) et mis en communication avec ledit moyen formant clapet de non-retour, tandis que l'espace mis en communication avec ledit moyen formant clapet de non-retour est séparé par un moyen d'expansion (40) pour ladite base, par rapport à l'autre espace.

4. Procédé d'empêchement de fuite d'eau selon la revendication 3, comprenant en outre l'étape d'enlèvement dudit moyen d'expansion (40), après l'étape de maintien de ladite base par ledit moyen de fixation.

5. Procédé d'empêchement de fuite d'eau selon la revendication 1, comprenant en outre les étapes de : découpage dudit tuyau (52) en vue de former une cavité annulaire (54), le long de la surface intérieure dudit tuyau, dans une position prédéterminée dudit tuyau; et disposition dudit élément de recouvrement (10) dans ladite cavité.

6. Elément de recouvrement pour empêcher une entrée et une sortie de fuite d'eau par rapport à une canalisation, comprenant :
un manchon déformable élastiquement (12) présentant une pluralité de parties saillantes (18,20,22,24,64,66,68,70,72) déformables élastiquement et s'étendant successivement circonférentiellement, formées à des intervalles déterminés sur la surface circonférentielle du manchon, dans sa direction axiale;
une base en forme de feuille (14,74,80,89,88,94,104,114,124, 136,146) placée à l'intérieur dudit manchon, sous une forme cylindrique enroulée, radialement expansible;
des moyens de fixation (26,28,76,78,82,86,90,92,96,98,100, 102,106,108,110,116,118,120,122,126,128,130,132,134,138,140 142,144,148,150,152) pour maintenir ladite base sous une forme sensiblement cylindrique, lorsque ladite base est expansée radialement dans ledit manchon; et
des moyens formant clapet de non-retour (30,32,34,36) définis par ledit manchon et ladite base, lorsque ladite base est expansée radialement, lesdits moyens formant clapet de non-retour permettant au matériau d'injection doté d'une certaine fluidité de s'écouler depuis l'intérieur de ladite base, vers l'espace compris entre les deux parties saillantes (24,24) disposées le plus à l'intérieur dans la direction axiale.

7. Elément de recouvrement pour empêcher une fuite d'eau selon la revendication 6, dans lequel ledit moyen formant clapet de non-retour comprend un couple de parties découpées (30, 32) formées, en des emplacements éloignés l'un de l'autre, sur ledit manchon, ladite partie découpée traversant ledit manchon dans le sens de son épaisseur, et un trou (34) traversant ladite base dans le sens de son épaisseur, dans une position correspondant à la partie située entre lesdites parties découpées sur la base.
